# EUROPÄISCHE PATENTSCHRIFT

(11) **EP 3 345 774 B1**
(45) Veröffentlichungstag und Bekanntmachung des Hinweises auf die Patenterteilung: **18.11.2020**
(21) Anmeldenummer: 17150300.6
(22) Anmeldetag: 04.01.2017
(51) Int. Cl.: B44C 5/04, B32B 5/14, B32B 5/16

(54) **VERFAHREN ZUR HERSTELLUNG EINES DEKORIERTEN WAND- ODER BODENPANEELS**
METHOD FOR PRODUCING A DECORATED WALL OR FLOOR PANEL
PROCÉDÉ DE FABRICATION D'UN PANNEAU MURAL OU DE SOL DÉCORÉ

(43) Veröffentlichungstag der Anmeldung: 11.07.2018
(73) Patentinhaber: Akzenta Paneele + Profile GmbH, 56759 Kaisersesch (DE)
(72) Erfinder: HANNIG, Hans-Jürgen, 51427 Bergisch Gladbach (DE)
(74) Vertreter: Michalski Hüttermann & Partner Patentanwälte mbB

(56) Entgegenhaltungen:
- EP-A1- 1 009 601
- DE-U1-202016 101 306
- US-A- 4 045 262
- US-A1- 2007 256 379

## Beschreibung

Die vorliegende Erfindung betrifft einen Träger für ein dekoriertes Wand- oder Bodenpaneel. Die vorliegende Erfindung betrifft ferner ein dekoriertes Wand- oder Bodenpaneel, das einen derartigen Träger aufweist, sowie ein Verfahren zum Herstellen eines Trägers für ein dekoriertes Wand- oder Bodenpaneel.

Dekorierte Paneele sind an sich bekannt, wobei unter dem Begriff Wandpaneel auch Paneele zu verstehen sind, die zur Decken- oder Türbekleidung geeignet sind. Sie bestehen üblicherweise aus einem Träger beziehungsweise Kern aus einem festen Material, beispielsweise einem Holzwerkstoff, der auf mindestens einer Seite mit einer Dekorschicht und einer Deckschicht sowie gegebenenfalls mit weiteren Schichten, beispielsweise einer zwischen Dekor- und Deckschicht angeordneten Verschleißschicht, versehen ist. Die Dekorschicht ist üblicherweise ein gedrucktes Papier, das mit einem Harz imprägniert ist oder eine Druckschicht, die auf den Träger etwa unter Verwendung eines geeigneten Druckuntergrunds aufgebracht ist.

Aus dem Dokument EP 2 829 415 A1 ist ein Verfahren zur Herstellung eines dekorierten Wand- oder Bodenpaneels bekannt, bei dem ausgehend von einem granularen Trägermaterial ein Träger und anschließend ein Paneel geformt wird. Bei einem derartigen Verfahren kann beispielsweise ein WPC als Trägermaterial Verwendung finden. Das Dokument DE 20 2016 101 306 U1 offenbart einen Träger gemäß dem Oberbegriff von Anspruch 1 und ein Verfahren gemäß dem Oberbegriff von Anspruch 11. Die Dokumente US 4,045,262 und EP 1 009 601 B1 offenbaren WPC-Träger mit einem Dichtegradient.

Die Herstellung der Paneele kann dabei unter Umständen noch Verbesserungspotential bieten. Verbesserungspotential kann sich dabei insbesondere bezüglich der Anwendbarkeit des Endverbrauchers bieten.

Es ist daher die Aufgabe der vorliegenden Erfindung, einen Träger für ein dekoriertes Wand-oder Bodenpaneel bereitzustellen, der bei guten Eigenschaften eine verbesserte Anwendbarkeit ermöglicht.

Gelöst wird diese Aufgabe durch einen Träger mit den Merkmalen des Anspruchs 1. Gelöst wird diese Aufgabe ferner durch ein dekoriertes Wand- oder Bodenpaneel mit den Merkmalen des Anspruchs 10 sowie durch ein Verfahren mit den Merkmalen des Anspruchs 11. Bevorzugte Ausgestaltungen der Erfindung sind in den Unteransprüchen, in der Beschreibung oder den Figuren angegeben, wobei weitere in den Unteransprüchen oder in der Beschreibung oder den Figuren beschriebene oder gezeigte Merkmale einzeln oder in einer beliebigen Kombination einen Gegenstand der Erfindung darstellen können, wenn sich aus dem Kontext nicht eindeutig das Gegenteil ergibt.

Mit der Erfindung wird ein kunststoffhaltiger Träger für ein dekoriertes Wand- oder Bodenpaneel vorgeschlagen, aufweisend ein Trägermaterial mit einem kunststoffhaltigen thermoplastischen Matrixmaterial, in welches ein mineralisches Feststoffmaterial mit einer Partikelgröße von weniger oder gleich 800 µm eingebettet ist, wobei der Träger eine Länge, eine Breite und eine Dicke aufweist, wobei der Träger entlang seiner Dicke von einer unteren Oberfläche zu einer der unteren Oberfläche gegenüberliegend angeordneten oberen Oberfläche einen Dichtegradient aufweist derart, dass die über eine definierte Breite oder eine definierte Länge von wenigstens 5mm, bevorzugt wenigstens 20mm, beispielsweise von 25mm, gemittelte Dichte des Trägermaterials von der unteren Oberfläche zu der oberen Oberfläche zunächst abnimmt und anschließend wieder zunimmt.

Ein derartiger Träger kann gegenüber den Lösungen aus dem Stand der Technik signifikante Vorteile bieten beispielsweise hinsichtlich der Anwendbarkeit. Dabei sollen die nachfolgend beschrieben Eigenschaften des Dichtegradienten bevorzugt über die gesamte Länge und die gesamte Breite des Trägers vorliegen, wobei der spezifische Wert beziehungsweise die Größe des Dichtegradienten in definierten Bereichen entlang der Breite oder Länge grundsätzlich variieren kann, ohne den Rahmen der vorliegenden Erfindung zu verlassen.

Der vorbezeichnete Träger dient insbesondere dem Einsatz in einem dekorierten Wand- oder Bodenpaneel.

Unter dem Begriff "dekoriertes Wand- oder Bodenpaneel" beziehungsweise "Dekorpaneel" sind im Sinne der Erfindung insbesondere Wand-, Decken, Tür- oder Bodenpaneele zu verstehen, welche ein auf eine Trägerplatte aufgebrachtes eine Dekorvorlage nachbildendes Dekor aufweisen. Dekorpaneele werden dabei in vielfältiger Weise sowohl im Bereich des Innenausbaus von Räumen, als auch zur dekorativen Verkleidung von Bauten, beispielsweise im Messebau, verwendet. Die Dekorpaneele weisen dabei vielfach ein Dekor auf, welches einen Naturwerkstoff nachempfinden soll.

Beispiele für solche nachempfundenen Naturwerkstoffe beziehungsweise Dekorvorlagen sind Holzarten wie beispielsweise Ahorn, Eiche, Birke, Kirsche, Esche, Nussbaum, Kastanie, Wenge oder auch exotische Hölzer wie Panga-Panga, Mahagoni, Bambus und Bubinga. Darüber hinaus werden vielfach Naturwerkstoffe wir Steinoberflächen oder Keramikoberflächen nachempfunden.

Entsprechend kann unter einer "Dekorvorlage" im Sinne der vorliegenden insbesondere verstanden werden ein derartiger originaler Naturwerkstoff beziehungsweise zumindest eine Oberfläche eines solchen, der durch das Dekor imitiert beziehungsweise nachempfunden werden soll.

Unter einem "Träger" kann insbesondere eine in einem fertig gestellten Paneel als Kern beziehungsweise als Basislage dienende Lage verstanden werden. Beispielsweise kann der Träger dem Paneel bereits eine geeignete Stabilität verleihen oder zu dieser beitragen.

Entsprechend kann unter einem Trägermaterial ein derartiges Material verstanden werden, welches den Träger zumindest zu einem mehrwiegenden Teil bildet. Insbesondere kann der Träger aus dem Trägermaterial bestehen.

Ein vorbeschriebener Träger weist ein kunststoffhaltiges thermoplastisches Matrixmaterial auf, in welches ein mineralisches Feststoffmaterial mit einer Partikelgröße von weniger oder gleich 800 µm, bevorzugt von weniger oder gleich 600 µm eingebettet ist.

Das Matrixmaterial dient insbesondere dazu, bei dem fertig hergestellten Träger das Feststoffmaterial aufzunehmen beziehungsweise einzubetten. Das Matrixmaterial weist dabei einen Kunststoff oder eine Kunststoffmischung auf.

In Abhängigkeit des gewünschten Anwendungsgebietes und der gewünschten Eigenschaften des Paneels können die Anteile an Matrixmaterial beziehungsweise Feststoffmaterial wählbar sein. Dadurch kann eine gute Adaptierbarkeit an das gewünschte Anwendungsgebiet möglich werden. Grundsätzlich kann es jedoch bevorzugt sein, dass der Anteil des Feststoffmaterials größer oder gleich dem Anteil des Matrixmaterials ist.

Beispiele für thermoplastische Kunststoffe, welche bevorzugt als Matrixmaterial dienen können, umfassen Polyethylen oder Polypropylen oder Mischungen aus den vorgenannten Kunststoffen. Es kann weiterhin bevorzugt sein, dass das Matrixmaterial Polypropylen, etwa in Form von LDPE, umfasst, wobei das Polypropylen eine Mischung aus einem Homopolymer und einem Copolymer aufweisen kann. Insbesondere eine Mischung aus einem Homopolymer und einem Copolymer kann für das Matrixmaterial besonders vorteilhafte Eigenschaften ermöglichen, indem sie etwa etwa in einem Bereich von ≥ 180°C bis ≤ 200°C zu einem Träger geformt werden können, so dass eine besonders effektive Prozessführung, etwa mit beispielhaften Liniengeschwindigkeiten in einem Bereich von 6m/min, ermöglicht werden kann. Ferner kann das Matrixmaterial grundsätzlich frei von einem Haftvermittler sein.

Als Copolymer kann beispielsweise ein solches Verwendung finden, das aus Propylen und Ethylen als Monomereinheiten aufgebaut ist, beispielsweise daraus besteht, wobei die Dichte des Copolymers größer oder gleich der Dichte des Homopolymers sein kann.

Durch das Verwenden eines Homopolymers kann insbesondere eine hohe Schmelzflussrate ermöglicht werden, wobei die Schmelzflussrate des Homopolymers insbesondere größer sein kann als die des Copolymers. Das kann eine besonders gute Formbarkeit des Trägers während des Herstellungsverfahrens ermöglichen. Ferner kann das Homopolymer dadurch ein besonders gutes Einbetten des Feststoffmaterials ermöglichen. Das Copolymer dagegen kann insbesondere der mechanischen Festigkeit des Trägermaterials beziehungsweise des Trägers dienen, da ein Copolymer oftmals eine insbesondere mit Bezug auf das Homopolymer vergleichsweise große Härte aufweist.

Mit Bezug auf die Verteilung von Homopolymer und Copolymer kann es bevorzugt sein, dass das Homopolymer bezogen auf das Polypropylen in einem Anteil von ≥ 10 Gew.-% bis ≤ 40 Gew.-%, beispielsweise in einem Anteil von ≥ 20 Gew.-% bis ≤ 30 Gew.-%, vorliegt, etwa in einem Anteil von ≥ 23 Gew.-% bis ≤ 28 Gew.-%, und/oder dass das Copolymer bezogen auf das Polypropylen in einem Anteil von ≥ 60 Gew.-% bis ≤ 90 Gew.-%, beispielsweise in einem Anteil von ≥ 70 Gew.-% bis ≤ 80 Gew.-%, etwa in einem Anteil von ≥ 72 Gew.-% bis ≤ 76 Gew.-%, vorliegt, insbesondere wobei das Polypropylen aus dem Homopolymer und dem Copolymer besteht.

Bezüglich des Feststoffs, der in dem Matrixmaterial verteilt ist, weist dieser eine Partikelgröße von weniger als 800 µm, bevorzugt von weniger als 600 µm, auf. Dadurch kann der Feststoff sehr fein in dem Matrixwerkstoff verteilt sein. Der Feststoff ist ein mineralisches Material, wie etwa Steinmehl, Kreide oder andere anorganische mineralische Materialien. Besonders bevorzugt kann es sein, wenn der Feststoff aus Talkum gebildet wird, beispielsweise daraus besteht. Grundsätzlich können die Feststoffe nicht beschränkend die Form von Schnitzeln, Spänen Mehl oder Körnern, also etwa pulverartig, vorliegen.

Bezüglich der Verwendung von Talkum als Feststoff kann es von Vorteil sein, dass insbesondere in dieser Ausgestaltung eine hohe Stabilität ermöglicht werden kann. Darüber hinaus kann ein derartiges Trägermaterial eine verbesserte Feuchteresistenz ermöglichen, insbesondere mit einer reduzierten feuchte- oder hitzebedingten Quellung. Unter Talkum wird dabei in an sich bekannter Weise ein Magnesiumsilikathydrat verstanden, welches beispielsweise die chemische Summenformel Mg₃[Si₄O₁₀(OH)₂] aufweisen kann. Vorteilhaft kann es sein, wenn die spezifische Oberflächendichte nach ISO 4352 (BET)) der Talkum-Partikel in einem Bereich liegt von ≥ 4 m²/g bis ≤ 8 m²/g, etwa in einem Bereich von ≥ 5 m²/g bis ≤ 7 m²/g. Weiterhin kann es vorteilhaft sein, wenn das Talkum bei einer Schüttdichte nach DIN 53468 vorliegt in einem Bereich von ≥ 0,15 g/cm³ bis ≤ 0,45 g/cm³, etwa in einem Bereich von ≥ 0,25 g/cm³ bis ≤ 0,35 g/cm³. Bevorzugt kann es vorgesehen sein, dass Talkum in Form von Partikeln vorliegt, die eine Partikelgröße D₅₀ aufweisen in einem Bereich von ≥ 3µm bis ≤ 6µm, vorzugsweise in einem Bereich von ≥ 4µm bis ≤ 5µm, beispielsweise von 4,5 µm, und/oder dass das Talkum in Form von Partikeln vorliegt, die eine Partikelgröße D₉₈ aufweisen in einem Bereich von ≥ 10µm bis ≤ 30µm, vorzugsweise in einem Bereich von ≥ 15µm bis ≤ 20µm, beispielsweise von 17 µm. Zur Bestimmung der Partikelgrößenverteilung kann grundsätzlich auf die allgemein bekannten Verfahren, wie beispielsweise die Laserdiffraktometrie, zurückgegriffen werden, mit welcher Partikelgrößen im Bereich von einigen Nanometern bis hin zu mehreren Millimetern bestimmt werden können. Mittels dieser Methode lassen sich auch D₅₀ bzw. D₉₈ Werte ermitteln, welche jeweils aussagen, dass 50% (D₅₀) bzw. 98% (D₉₈) der gemessenen Partikel kleiner sind als der jeweils angegebene Wert.

In einer besonders bevorzugten Ausgestaltung kann es dabei von Vorteil sein, dass das Feststoffmaterial zu wenigstens 50 Gew.-%, etwa zu wenigstens 80 Gew.-%, insbesondere etwa zu wenigstens 90 Gew.-%, beispielsweise zu wenigstens 99 Gew.-% bezogen auf das Feststoffmaterial durch Talkum gebildet ist, wobei das Matrixmaterial in einer Menge, bezogen auf das Trägermaterial, von ≥ 20 Gew.-% bis ≤ 70 Gew.-%, beispielsweise von ≥ 30 Gew.-% bis ≤ 55 Gew.-% vorliegt und wobei das Feststoffmaterial, bezogen auf das Trägermaterial, in einer Menge, bezogen auf das Trägermaterial, von ≥ 30 Gew.-% bis ≤ 80 Gew.-%, beispielsweise von ≥ 40 Gew.-% bis ≤ 65 Gew.-% vorliegt, und wobei das Matrixmaterial und das Feststoffmaterial gemeinsam, bezogen auf das Trägermaterial, in einer Menge von ≥ 90 Gew.-% vorliegen.

Somit kann es vorteilhaft sein, dass das Trägermaterial zu einem Großteil aus dem Feststoffmaterial und dem Matrixmaterial besteht. Besonders bevorzugt kann es vorgesehen sein, dass das Matrixmaterial und das Feststoffmaterial gemeinsam, bezogen auf das Trägermaterial, in einer Menge von ≥ 97 Gew.-%, etwa in einer Menge von 100 Gew.-%, vorliegen, das Trägermaterial somit aus dem Matrixmaterial und dem Feststoffmaterial besteht.

Besonders bevorzugt kann das Trägermaterial aus wenigstens einem polymeren thermoplastischen Kunststoff etwa als Kunststoffmischung als Matrixmaterial, Talkum und gegebenenfalls einem Haftvermittler bestehen. Insbesondere in dieser Ausgestaltung kann eine Herstellung besonders kostengünstig möglich sein und kann die Prozessführung besonders einfach sein.

Beispielsweise kann das Trägermaterial ferner ein fasermaterial aufweisen, dass, bezogen auf das Trägermaterial, in einer Menge von > 0 Gew.-% bis ≤ 20 Gew.-%, insbesondere von ≥ 3 Gew.-% bis ≤ 12 Gew.-%, etwa von ≥ 5 Gew.-% bis ≤ 10 Gew.-% vorliegen kann. Bezüglich des Fasermaterials kann es vorgesehen sein, dass das Fasermaterial Fasern aufweist, die ausgewählt sind aus der Gruppe bestehend aus pflanzlichen, tierischen, mineralischen oder auch künstlichen Fasern

Des Weiteren kann das Trägermaterial zwischen ≥0 Gew.-% und ≤10 Gew.-% weiterer Additive, wie beispielsweise Fließhilfsmittel, Thermostabilisatoren oder UV-Stabilisatoren aufweisen.

Der vorbeschriebene Träger weist ferner eine Länge, eine Breite und eine Dicke auf. Dabei sind die Länge und die Breite grundsätzlich rechtwinklig zu einander angeordnet und die Dicke ist wiederum rechtwinklig zu der Länge und der Breite angeordnet. Die Dicke verläuft dabei von einer unteren Oberfläche zu einer oberen Oberfläche, wobei die untere Oberfläche dazu vorgesehen ist, zu einem Untergrund ausgerichtet zu sein, und wobei die obere Oberfläche zu dem Dekor ausgerichtet werden soll.

Bei dem vorbeschrieben Träger ist es vorgesehen, dass dieser entlang seiner Dicke von einer unteren Oberfläche zu einer oberen Oberfläche einen Dichtegradient aufweist derart, dass die über eine definierte Breite oder eine definierte Länge von wenigstens 5mm, bevorzugt wenigstens 20mm, beispielsweise von 25mm, gemittelte Dichte des Trägermaterials von der unteren Oberfläche zu der oberen Oberfläche zunächst abnimmt und anschließend wieder zunimmt. Somit kann der Dichtegradient bevorzugt nicht auf einen kleinsten Raum beziehungsweise auf einen linienförmigen Bereich von der unteren Oberfläche zu der oberen Oberfläche vorgesehen sein, sondern kann der Dichtegradient vorliegen über einen definierten Bereich vorbestimmter Länge beziehungsweise Breite, wobei die Dichtewerte über diese Länge beziehungsweise Breite gemittelt werden, wie dies aus dem nachfolgend beschriebene Messverfahren ersichtlich wird. Somit soll nicht ein zufälliger Bereich geringere Dichte in einem kleinen Bereich des Trägers gemeint sein, sondern eine gewollte Dichteverteilung über einen definierten Bereich bevorzugt über die gesamte Breite und/oder Länge des Trägers.

Mit Bezug auf die genannten Dichtewerte können diese beispielsweise ermittelbar sein mittels Röntgenstrahlen, wie dies beispielsweise für Messungen entlang der Dicke von Span-, OSB- und MDF-Plattenstücken bekannt ist. Dabei kann eine Probe zwischen einer Röntgenstrahlquelle und einem Empfänger positioniert werden und etwa nach einer entsprechenden Kalibrierung kann durch die Detektion der den Träger durchstrahlten Röntgenstrahlung die Dichte ermittelt werden. Um das Dichteprofil zu ermitteln kann es insbesondere von Vorteil sein, das entsprechende Paneel in Probenkörper, etwa einer Größe von 50x25mm zu zerteilen und mit Röntgenstrahlen parallel zu der oberen beziehungsweise unteren Oberfläche und sukzessive etwa unter Verlagerung des Probenkörpers von der Oberfläche zu der Unterseite zu durchscheinen, wobei die Röntgenstrahlen die Breite von 25mm durchscheinen. Durch die so ermittelten Daten kann das Dichteprofil entlang der Dichte ermittelt werden. Somit beziehen sich die genannten Dichtewerte beziehungsweise Dichteprofiel stets auf einen Mittelwert über eine Breite von 25mm des Paneels beziehungsweise des Probenkörpers. Beispielsweise können die Messungen durchgeführt werden mit dem Messgerät DPX300 der Firma Imal.

Beispielsweise kann es vorgesehen sein, dass der Träger beabstandet von der unteren Oberfläche, die dazu vorgesehen ist, in Richtung eines Untergrunds platziert zu werden, und einer oberen Oberfläche, die dazu vorgesehen ist, mit einem Dekor versehen zu werden und von dem Untergrund abgewandt ist ein absolutes Dichteminimum aufweist, derart dass dieses entlang der Dicke der Trägerplatte von lokalen und/oder absoluten Dichtemaxima umgeben ist.

Bezüglich eines Dichtemaximums beziehungsweise eines Dichteminimums kann es vorgesehen sein, dass dieses ein absolutes Maximum oder Minimum ist, also die geringste oder höchste Dichte entlang der Dicke, oder ein lokales Minimum oder Maximum, also ein lokaler Dichtepeak neben anderen lokalen Dichtepeaks.

Die spezifischen Werte der Dichten sind dabei in für den Fachmann verständlicher Weise abhängig von dem spezifisch verwendeten Materialien, also beispielsweise dem verwendeten Matrixmaterial und dem Feststoff. Darüber hinaus kann durch die Wahl der konkret gewählten Dichten die Größe des Dichtegradients definiert werden.

Beispielsweise kann ein absolutes Dichtemaximum vorliegen in einem Bereich von ≥ 1400 kg/m³, etwa von ≥ 1460 kg/m³, etwa in einem Bereich von ≥ 1480 kg/m³, wobei eine obere Grenze gegeben sein kann durch ≤ 1600 kg/m³, und/oder kann ein insbesondere absolutes Dichteminimum vorliegen bei < 1459 kg/m³, wobei eine untere Grenze etwa gegeben sein kann bei ≥ 1250 kg/m³.

Weiterhin kann es vorgesehen sein, dass der Abstand eines ersten lokalen Dichtemaximums und eines zweiten lokalen Dichtemaximums in einem Bereich liegt von größer oder gleich der Hälfte der Trägerdicke bis zu kleiner oder gleich der Trägerdicke, wobei sich die Maxima beziehen auf die entsprechend gegenüberliegenden äußeren Bereiche bezüglich des Dichteminimums. Dabei können die lokalen Dichtemaxima bezogen auf den jeweils äußeren Bereich absolute Dichtemaxima sein. Es kann ferner von Vorteil sein, dass die jeweiligen Maxima von der jeweiligen Oberfläche beabstandet sind.

Beispielsweise kann es vorgesehen sein, dass ein Dichtegradient derart vorliegt, dass die Dichte von einer unteren Oberfläche zu einer oberen Oberfläche im Wesentlichen zunächst konstant oder auch schwankend abnimmt bis zu einem Dichteminimum und anschließend konstant oder auch schwankend zunimmt. Unter einer konstanten oder schwankenden Abnahme beziehungsweise Zunahme kann dabei im Sinne der vorliegenden Erfindung verstanden werden, dass die Dichte etwa sukzessive konstant kleiner beziehungsweise größer wird, oder von einem äußeren Bereich zu einem inneren Bereich sich als Ergebnis verringert beziehungsweise vergrößert, wobei sich in Teilabschnitten auch von dem Ergebnis abweichende Dichteveränderungen einstellen können.

Beispielsweise kann es vorgesehen sein, dass ein Dichtegradient derart vorliegt, dass die Dichte von der oberen Oberfläche zu der unteren Oberfläche zunächst über mindestens drei, bevorzugt mindestens fünf, Messpunkte sukzessive abnimmt und anschließend über mindestens drei, bevorzugt mindestens fünf, Messpunkte sukzessive zunimmt, wobei die Messpunkte zweckmäßiger Weise entlang der Dicke vorliegen und dabei grundsätzlich frei wählbar und insbesondere von einander verschieden sind. Dies kann insbesondere bedeuten, dass unter Berücksichtigung gewisser möglicher Schwankungen die Dichte von der unteren Oberfläche zu der oberen Oberfläche im Wesentlichen kontinuierlich abnehmen und anschließend wieder zunehmen kann.

Alternativ oder zusätzlich kann der Träger entlang seiner Dicke wenigstens einen inneren und zwei sich gegenüberliegend angeordnete äußere Bereiche aufweist, wobei entlang der Dicke des Trägers ein Dichtegradient derart vorliegt, dass der innere Bereich eine niedrigere Dichte aufweist, als die beiden äußeren Bereiche, wobei die äußeren Bereiche eine im Wesentlichen konstante Dichte aufweisen. In anderen Worten weist der Träger einen inneren Bereich auf, der entlang der Dicke von dem ersten äußeren Bereich und dem zweiten äußeren Bereich insbesondere im Sinne einer Sandwich-Struktur, umgeben. Dabei bezieht sich der Begriff äußerer Bereich im Sinne der vorliegenden Erfindung darauf, dass dieser Bereich bezüglich des inneren Bereichs weiter außen, also näher an der Oberfläche des Trägers, angeordnet ist, als der innere Bereich. Die äußeren Bereiche, also beispielsweise der erste äußere Bereich und der zweite äußere Bereich, können dabei die jeweilige Oberfläche des Trägers bilden beziehungsweise aufweisen, wobei die Dicke des Trägers von der Oberfläche des ersten Bereichs zu der Oberfläche des zweiten Bereichs verläuft, wobei die vorliegende Erfindung nicht jedoch nicht hierauf beschränkt ist. Die Bereiche können dabei eine im Wesentlichen konstante Dichte aufweisen, etwa mit einer Schwankung von ≥ 0% bis ≤ 10 %, beispielsweise von ≥ 0% bis ≤ 5 %, bezogen auf den Mittelwert der Dichte in diesem Bereich.

Bevorzugt kann der innere Bereich reduzierter Dichte eine Dicke aufweisen in einem Bereich von > 0% bis ≤ 50%, beispielsweise von ≥ 15% bis ≤ 40% der Gesamtdicke des Trägers. Diese Ausgestaltung kann insbesondere dann definierbar sein, wenn, wie dies grundsätzlich und unabhängig der jeweiligen Ausführungsform von Vorteil sein kann, der innere Bereich und die äußeren Bereiche entlang der Dicke jeweils zumindest teilweise eine im Wesentlichen konstante Dichte aufweisen, wie dies vorstehend beschrieben ist. Beispielhafte Dicken eines Trägers liegen beispielsweise in einem Bereich von ≥ 3mm bis ≤ 6mm.

Bei dem vorbeschriebenen Träger ist es somit vorgesehen, dass dieser an seinen äußeren Bereichen eine vergleichsweise hohe Dichte aufweist und an einem inneren Bereich eine vergleichsweise niedrige Dichte aufweist. Dies erlaubt, dass der Träger durch seine äußeren Bereiche eine hohe Stabilität aufweist, so dass die Gefahr von Beschädigungen des Paneels während des Transports und während des Gebrauchs äußerst gering ist.

Dadurch, dass ein mittlerer Bereich jedoch eine geringere Dichte aufweist, kann das Gewicht des Trägers trotz den vorbeschriebenen hohen Stabilitätseigenschaften signifikant reduziert werden, was erhebliche Vorteile bei der Anwendung, wie etwa bei dem Verlegen durch einen Endanwender, oder auch beim Transport, mit sich bringen kann. Der vorbeschriebene Träger ist somit ausgestaltet in Abkehr von den Lösungen aus dem Stand der Technik, bei denen gattungsgleiche Träger mit einer Kunststoffmatrix und darin fein verteiltem Feststoff mit einer sehr geringen Größe insbesondere ein sehr homogenes Trägermaterial gefordert war. Bei dem vorbeschrieben Träger jedoch kann durch eine gezielte im Stand der Technik gerade nicht gewünschte Heterogenität eine gezielte Eigenschaftsmatrix erhalten werden, die so im Stand der Technik nicht oder nur begrenzt möglich war.

Dabei wird es möglich, durch eine gezielte Ausgestaltung des Dichtegradienten, insbesondere die Eigenschaften Stabilität und Gewicht in gewünschter Weise an spezifische Anwendungsgebiete anzupassen.

In überraschender Weise konnten somit bei Erhalt der Stabilität weitere signifikante Vorteile ermöglicht werden, indem vormals ungewünschte Eigenschaften gerade gezielt ausgenutzt werden. Insbesondere bei den vorbeschriebenen Trägermaterialien war vormals ein hoher Grad an Homogenität gewünscht, was bei einem vorbeschriebenen Träger jedoch gerade verhindert werden soll.

Dadurch, dass das Matrixmaterial einen thermoplastischen Kunststoff aufweist, kann es trotz der hohen Stabilität ermöglicht werden, dass aus dem Trägermaterial erzeugte Paneele sehr elastisch beziehungsweise federnd sein können, was einen komfortablen Eindruck beim Begehen erlaubt und ferner die auftretenden Geräusche bei einem Begehen im Vergleich zu herkömmlichen Materialien reduzieren kann, somit ein verbesserter Trittschall realisierbar sein kann.

Durch eine Beschränkung der Materialien des Trägermaterials und damit durch eine geringe Anzahl an Materialien zum Herstellen des Trägers kann der Träger besonders kostengünstig erzeugbar sein. Darüber hinaus kann die Prozessführung der Herstellung eines Trägers beziehungsweise eines Paneels sehr einfach sein, so dass auch die Herstellung einfach und kostenlos möglich ist.

Ein vorbeschriebener Träger insbesondere mit Talkum als Feststoff in einem Matrixmaterial, wie dies vorstehend beschrieben ist, bietet weiterhin insbesondere den Vorteil einer guten Feuchteresistenz. Insbesondere kann unter Verwendung eines Trägermaterials, wie dies vorstehend beschrieben ist, signifikant reduziert oder sogar vollständig verhindert werden, dass ein aus dem Trägermaterial hergestelltes Paneel bei Feuchteeinwirkung aufquillt. Ferner kann auch eine verbessere Wärmeformbeständigkeit gegeben sein, also etwa eine hitzebedingte Ausdehnung verhindert oder zumindest signifikant reduziert werden und die Verwendung von Talkum kann ferner Vorteile bezüglich des Elastizitätsmoduls, der Kriechfestigkeit.

Es kann bevorzugt sein, dass der Dichtegradient ausgebildet ist durch ein entlang der Dicke des Trägers variierendes eingeschlossenes Gasvolumen. Diese Ausgestaltung kann auf besonders kostengünstige Weise eine besonders geringe Dichte ermöglichen, so dass das Gewicht des Trägers besonders effektiv reduziert werden kann. Beispielsweise kann diese Ausgestaltung realisierbar sein durch die Auswahl des Rohprodukts zum Herstellen des Trägers, etwa durch die Wahl der Partikelgröße von eingesetztem Granulat. Weiterhin kann diese Ausgestaltung etwa realisierbar sein durch das Verwenden von geschäumten Materialien in der inneren Schicht. Darüber hinaus kann insbesondere in dieser Ausgestaltung eine Materialeinsprung erreicht werden, was Kosten bei der Herstellung sparen kann.

Weiterhin kann es bevorzugt sein, dass der Dichtegradient ausgebildet ist durch einen entlang der Dicke des Trägers variierenden Feststoffanteil. In dieser Ausgestaltung kann der Dichtegradient besonders definiert darstellbar sein, da das Anordnen des Feststoffs in der Matrix sehr exakt steuerbar sein kann. Diese Ausgestaltung kann sich ferner dadurch auszeichnen, dass ohne Lufteinschlüsse die Stabilität des Trägers besonders hoch sein kann.

Weiterhin kann es bevorzugt sein, dass der Dichtegradient ausgebildet wird durch eine entlang der Dicke des Trägers variierende Art Trägermaterials, also etwa des Feststoffs und/oder des Matrixmaterials. Beispielsweise kann das Trägermaterial in einem Bereich hoher Dichte einen anderen Feststoff aufweisen, als in einem Bereich niedriger Dichte und/oder sich entsprechend in dem Matrixmaterial unterscheiden. Beispielsweise kann das Trägermaterial in dem Bereich hoher Dichte nur oder zusätzlich Talkum aufweisen und in dem Bereich niedriger Dichte nur oder zusätzlich einen anderen Feststoff. Somit kann der dem Feststoffmaterial zugesetzte Feststoff insbesondere eine verglichen mit Talkum reduzierte Dichte aufweisen. Beispielsweise kann der leichtere zugesetzte Stoff eine Rohdichte aufweisen, die in einem Bereich liegt von ≤ 2000 kg/m³, insbesondere von ≤ 1500 kg/m³, beispielsweise von ≤ 1200 kg/m³, besondere bevorzugt von ≤ 500 kg/m³. Beispielhaft kann der weitere leichtere Feststoff ausgewählt sein aus der Gruppe bestehend aus Holz, etwa in Form von Holzmehl, Blähton, Vulkanasche, Bims, Porenbeton, insbesondere anorganischen Schäumen, Cellulose. Mit Bezug auf Porenbeton kann dies beispielsweise der von der Firma Xella unter dem Markennamen YTONG verwendete Feststoff sein, der im Wesentlichen aus Quarzsand, Kalk und Zement besteht.

Bezüglich des Trägermaterials kann dieses die gleichen Materialien aufweisen, jedoch sich nur in seiner Dichte unterscheiden. Dies kann beispielsweise realisierbar sein, indem bei dem Herstellungsprozess des Matrixmaterials, was in einem Extruder realisiert werden kann, bei einem Extrudiervorgang ein Vakuum angelegt wird. Dadurch kann bei einem höheren Vakuum eine vergleichsweise höhere Dichte erzielt werden und kann bei einem niedrigeren Vakuum eine vergleichsweise niedrigere Dichte erzielt werden.

Es kann weiterhin bevorzugt sein, dass ein Dichtegradient derart vorliegt, dass die Dichte entlang der Dicke abnimmt um einen Wert in dem Bereich von > 0% bis ≤ 30%, beispielsweise von > 0% bis ≤ 20%, etwa von ≥ 2% bis ≤ 17% wobei sich die genannten Werte beziehen auf ein insbesondere absolutes Dichtemaximum und ein insbesondere absolutes Dichteminimum entlang der Dicke.

In überraschender Weise hat sich herausgestellt, dass insbesondere in dieser Ausgestaltung eine gute Stabilität bei gleichzeitig signifikanter Gewichtseinsparung möglich sein kann.

Mit Bezug auf weitere technische Merkmale und Vorteile des Trägers wird hiermit explizit auf die Beschreibung des Paneels, des Verfahrens und auf die Figuren verwiesen.

Die vorliegende Erfindung betrifft ferner ein dekoriertes Paneel, insbesondere ein dekoriertes Wand- oder Bodenpaneel, aufweisend einen Träger und eine auf den Träger aufgebrachte Dekorschicht, insbesondere wobei auf der Dekorschicht eine mit einer Struktur versehene Deckschicht aufgebracht ist. Ein derartiges Paneel ist dadurch gekennzeichnet, dass der Träger wie vorstehend im Detail beschrieben ausgestaltet ist. Mit Bezug auf die spezifischen Merkmale wird somit auf die vorstehende Beschreibung verwiesen.

Die Randbereiche des Paneels können strukturiert beziehungsweise profiliert sein, um insbesondere lösbare Verbindungselemente vorzusehen. Diesbezüglich kann bei einer Profilierung im Sinne der Erfindung vorgesehen sein, dass mittels geeigneter materialabhebender Werkzeuge zumindest in einen Teil der Kanten des Dekorpaneels ein dekoratives und/oder funktionales Profil eingebracht wird. Dabei ist unter einem funktionalen Profil beispielsweise die Einbringung eines Nut- und/oder Federprofils in eine Kante zu verstehen, um Dekorpaneele über die eingebrachten Profilierungen miteinander verbindbar zu gestalten. Insbesondere bei Nut- und/oder Federprofilen sind dabei elastische Werkstoffe von Vorteil, da durch diese allein derartige Profile erzeugbar sind, welche besonders einfach handhabbar und stabil sind. So sind insbesondere keine weiteren Materialien notwendig, um die Verbindungselemente zu erzeugen.

Zusammenfassend kann das vorbeschriebene Paneel den Vorteil einer hohen Dimensionsstabilität mit Bezug auf Hitze- und Feuchtigkeitseinfluss bei gleichzeitig guten mechanischen Eigenschaften und leichtem Gewicht bieten. Ferner kann ein derartiges Paneel sehr stabil sein und gleichzeitig eine hohe Elastizität aufweisen, was insbesondere für eine effektive und kostengünstige Ausgestaltung von Verbindungselementen an dem Randbereich des Trägers und ferner bezüglich einer Trittschalldämmung von Vorteil sein kann.

Mit Bezug auf weitere technische Merkmale und Vorteile des Paneels wird hiermit explizit auf die Beschreibung des Trägers, des Verfahrens und auf die Figuren verwiesen.

Gegenstand der vorliegenden Erfindung ist ferner ein Verfahren zum Herstellen eines Trägers für ein dekoriertes Wand- oder Bodenpaneel, aufweisend die Verfahrensschritte:
a) Bereitstellen eines granularen Trägermaterials, wobei das Trägermaterial ein kunststoffhaltiges thermoplastisches Matrixmaterial und ein mineralisches Feststoffmaterial mit einer Partikelgröße von weniger oder gleich 800 µm aufweist, und
b) Ausbilden eines Trägers mit einer Länge, einer Breite und einer Dicke unter Behandlung des Trägermaterials mit Temperatur und Druck,
dadurch gekennzeichnet,
dass das Trägermaterial derart gewählt oder in Verfahrensschritt b) derart behandelt wird, dass der Träger entlang seiner Dicke von einer unteren Oberfläche zu einer der unteren Oberfläche gegenüberliegend angeordneten oberen Oberfläche einen Dichtegradient aufweist derart, dass die über eine definierte Breite oder eine definierte Länge von wenigstens 5mm, bevorzugt wenigstens 20mm, gemittelte Dichte des Trägermaterials von der unteren Oberfläche zu der oberen Oberfläche zunächst abnimmt und anschließend wieder zunimmt. Durch das vorbeschriebene Verfahren kann auf vorteilhafte Weise ein Träger ausgestaltet werden, wie dieser vorstehend im Detail beschrieben ist. Bezüglich der Vorteile des Trägers wird auf die vorstehende Beschreibung verwiesen.

Gemäß Verfahrensschritt a) erfolgt somit ein Bereitstellen eines granularen Trägermaterials, wobei das Trägermaterial ein kunststoffhaltiges thermoplastisches Matrixmaterial und ein mineralisches Feststoffmaterial mit einer Partikelgröße von weniger oder gleich 800 µm umfasst. Das granulare Trägermaterial kann dabei in vorgefertigten Trägermaterial-Partikeln bereitgestellt werden, wobei die Partikel bereits in das Matrixmaterial eingeschmolzenen Feststoff umfassen. Derartige Trägermaterial-Partikel können beispielsweise erhältlich sein durch einen Extrusionsvorgang, indem sämtliche Bestandteile des Trägermaterials in einem Extruder verarbeitet werden.

Bezüglich des Extrusionsvorgangs kann es vorgesehen sein, dass in dem Extruder ein Vakuum angelegt wird. Durch die Höhe des erzeugten Vakuums kann die Dichte des Trägermaterials eingestellt werden, indem bei einem großen Vakuum, also einem vergleichsweise geringen Druck, eine vergleichsweise höhere Dichte erzielt werden kann und bei einem vergleichsweise geringen Vakuum, also einem vergleichsweise geringen Druck, eine niedrigere Dichte erzielt werden kann.

Unter einem granularen Trägermaterial kann dabei ein Feststoff beziehungsweise ein Haufwerk eines Feststoffs verstanden werden, welcher eine Vielzahl fester Partikel, wie etwa Körner oder Kugeln, umfasst beziehungsweise daraus besteht. Beispielhaft aber nicht abschließend seien hier körnige oder pulverförmige Materialien genannt. Das Trägermaterial ist dabei das Material, aus welchem der Träger ausgestaltet ist, insbesondere woraus der Träger besteht. Bezüglich des verwendeten Trägermaterials wird dabei auf die vorstehende Beschreibung des Paneels beschrieben.

Gemäß Verfahrensschritt b) wird der Träger, etwa als bahnförmiger Träger, der anschließend in eine kleinere Größe zerteilt werden kann, mit einer Länge, einer Breite und einer Dicke unter Behandlung des Trägermaterials mit Temperatur und Druck ausgebildet.

Beispielsweise kann das granulare Trägermaterial zwischen zwei bandartigen Fördermitteln angeordnet werden, die umlaufend verfahren werden, so dass zwischen den Fördermitteln der Träger durch Einwirkung von Druck und Wärme, insbesondere unter zumindest teilweisem Aufschmelzen des Matrixmaterials, geformt werden kann. Das Trägermaterial kann so auf das untere Fördermittel aufgebracht werden und anschließend durch das untere und das obere Fördermittel begrenzt werden. Beispielsweise können die Fördermittel eine oder eine Mehrzahl an Presseinrichtungen und Heizeinrichtungen und gegebenenfalls Kühleinrichtungen durchlaufen, um den Träger so in geeigneter Weise formen zu können. Dabei können die bandartigen Fördermittel zumindest teilweise aus Polytetrafluorethylen (PTFE) ausgestaltet sein. Beispielsweise können die Bänder vollständig aus Polytetrafluorethylen geformt sein, oder es können etwa glasfaserverstärkte Kunststoffbänder oder Stahlbänder mit einer Beschichtung aus Polytetrafluorethylen Verwendung finden.

Das Anordnen des Trägermaterials kann dabei insbesondere mittels eines oder einer Mehrzahl an Streuköpfen realisierbar sein, welche das Trägermaterial definiert etwa aus Lagerbehältern austragen können. Dabei können die einzelnen Streuköpfe mit dem gleichen oder mit unterschiedlichem Material bestückt werden. Beispielsweise können die Streuköpfe in Verfahrrichtung des Trägermaterials hintereinander angeordnet sein, um so einen Schichtaufbau des Trägers zu ermöglichen.

In einem weiteren Schritt erfolgt beispielsweise nach dem Anordnen des Trägermaterials ein Formen des zwischen den bandartigen Fördermitteln angeordneten Trägermaterials unter Einwirkung von Temperatur beziehungsweise Wärme. In diesem Verfahrensschritt erfolgt durch die einwirkende Wärme beziehungsweise Hitze somit ein Aufschmelzen beziehungsweise Erweichen des Trägermaterials oder zumindest eines Teils desselben, wodurch beispielsweise das Granulat formbar werden kann. In diesem Zustand kann es den zwischen den Fördermitteln sich ausbildenden Aufnahmeraum ausfüllen und so einen etwa bahnförmigen Träger ausbilden, der weiter behandelt werden kann.

Als Presseinrichtungen können beispielsweise Walzen und/oder eine Zweibandpresse Verwendung finden. Insoweit eine Zweibandpresse als Presseinrichtung verwendet wird, können in dieser als abschließender Schritt bei der Trägerherstellung insbesondere die Oberflächeneigenschaften des Trägers mit geringem Druck und geringer Komprimierung eingestellt werden in einem sehr geringen Bereich, wie etwa einer Komprimierung von ≤ 7%, beispielsweise ≤ 5%.

Nach dem Durchlaufen der Press- und/oder Heizeinrichtungen, wie etwa einer Zweibandpresse als letzter Komprimierungseinrichtung, kann der erzeugte Träger zunächst in bahnartiger Form oder als vereinzelte plattenartige Träger als Zwischenprodukt gelagert werden und das Verfahren kann zunächst beendet sein. Vorzugsweise schließen sich jedoch unmittelbar weitere Behandlungsschritte an.

Zur Herstellung eines fertigen Paneels kann der zuvor erzeugte Träger folgend mit einem Dekor beziehungsweise einer Dekorschicht versehen und dieses mit einer Schutzschicht beziehungsweise einer Verschleiß- oder Deckschicht beschichtet werden.

Um ein Dekor aufzubringen, kann zunächst ein Dekoruntergrund auf zumindest einen Teilbereich des Trägers aufgebracht werden. Beispielsweise kann zunächst ein Primer insbesondere für Druckverfahren als Dekoruntergrund aufgebracht werden, etwa in einer Dicke von ≥ 10µm bis ≤ 60 µm. Dabei kann als Primer eine flüssige strahlungshärtende Mischung auf Basis eines Urethans oder eines Urethanacrylats, gegebenenfalls mit einem oder mehreren von einem Photoinitiator, einem Reaktivverdünner, einem UV-Stabilisator, einem Rheologiemittel wie einem Verdicker, Radikalfänger, Verlaufshilfsmittel, Entschäumer oder Konservierungsmittel, Pigment und/oder einem Farbstoff eingesetzt werden.

Zusätzlich zu dem Primer kann ein weiß gefärbter Haftgrund aufgebracht werden. Beispielsweise kann der Haftgrund Polyurethan aufweisen, etwa als Polyurethanlack ausgestaltet sein, und etwa mit weißen Pigmenten versehen sein.

Neben der Verwendung eines Primer ist es möglich, das Dekor auf ein mit einem entsprechenden Dekor bedruckbares Dekorpapier aufzubringen, welches etwa mittels einer zuvor auf den Träger aufgebrachten Harzschicht als Verbindungsmittel vorgesehen sein kann. Ferner kann auf das Papier ein Harz als Druckuntergrund aufgebracht werden, welche als Harzkomponente wenigstens eine Verbindung aufweisen kann ausgewählt aus der Gruppe bestehend aus Melaminharz, Formaldehydharz, Harnstoffharz, Phenolharz, Epoxidharz, ungesättigtes Polyesterharz, Diallylphthalat oder Mischungen dieser.

Anschließend kann das Dekor insbesondere durch einen Druckvorgang erzeugt werden, wobei sowohl für Flexo-Druck, Offset-Druck oder Siebdruckverfahren, als auch insbesondere Digitaldrucktechniken, wie beispielsweise Inkjet-Verfahren oder Laserdruck-Verfahren geeignet sind. Die Dekorschicht kann aus einer insbesondere strahlungshärtbaren Farbe und/oder Tinte ausgebildet werden. Beispielsweise kann eine UV-härtbare Farbe oder Tinte verwendet werden.

Es kann ferner gegebenenfalls zunächst etwa vor dem Bedrucken ein Vorbehandeln des Trägers zur elektrostatischen Entladung und gegebenenfalls anschließender elektrostatischer Beladung erfolgen. Dies kann insbesondere dazu dienen, das Auftreten von Unschärfen im Laufe der Dekoraufbringung zu vermeiden.

Bezüglich der Verschleiß- oder Deckschicht oberhalb der Dekorschicht kann es vorgesehen sein, dass diese als vorproduzierte Overlayschicht, etwa basierend auf Melamin, auf den bedruckten Träger aufgelegt und mit diesem durch Druck- und/oder Wärmeeinwirkung verbunden wird. Ferner kann es bevorzugt sein, dass zur Ausbildung der Verschleiß- und/oder Deckschicht ebenfalls eine strahlungshärtbare Zusammensetzung, wie beispielsweise ein strahlungshärtbarer Lack, wie einem Acryllack, aufgebracht wird. Dabei kann es vorgesehen sein, dass die Verschleißschicht Hartstoffe wie beispielsweise Titannitrid, Titancarbid, Siliciumnitrid, Siliciumcarbid, Borcarbid, Wolframcarbid, Tantalcarbid, Aluminiumoxid (Korund), Zirconiumoxid oder Mischungen dieser aufweist, um die Verschleißfestigkeit der Schicht zu erhöhen. Dabei kann die Auftragung beispielsweise mittels Walzen, wie Gummiwalzen oder mittels Gießvorrichtungen aufgetragen werden.

Insbesondere kann in die Schutzschicht beziehungsweise Verschleiß- oder Deckschicht eine Strukturierung, insbesondere eine mit dem Dekor übereinstimmende Oberflächenstrukturierung durch das Einbringen von Poren eingebracht werden. Dies kann beispielsweise durch das Einprägen entsprechender Strukturen realisiert werden.

Es kann besonders bevorzugt sein, wenn die Verschleiß- oder Deckschicht, etwa mittels eines Tintenstrahldruckers, und/oder durch einen Mehrfachauftrag, auf die Oberfläche aufgedruckt wird, da so höchst genaue Strukturen erzeugt werden können.

Zurückkommend auf das vorbeschriebene Verfahren zum Herstellen eines Trägers ist es vorgesehen, dass das Trägermaterial derart gewählt oder in Verfahrensschritt b) derart behandelt wird, dass der Träger entlang seiner Dicke von einer unteren Oberfläche zu einer der unteren Oberfläche gegenüberliegend angeordneten oberen Oberfläche einen Dichtegradient aufweist derart, dass die über eine definierte Breite oder eine definierte Länge von wenigstens 5mm, bevorzugt wenigstens 20mm, gemittelte Dichte des Trägermaterials von der unteren Oberfläche zu der oberen Oberfläche zunächst abnimmt und anschließend wieder zunimmt.

Bezüglich der Vorteile eines derart hergestellten Trägers wird auf die vorstehende Beschreibung verwiesen.

Beispielsweise kann das vorbeschriebene Verfahren derart ausgeführt werden, dass der Träger mehrschichtig aufgebaut wird derart, dass wenigstens ein innerer Bereich in Richtung der Dicke aus einem ersten granularen Trägermaterial geformt ist und dass zwei den inneren Bereich entlang der Dicke des Trägers umrahmende äußere Bereiche aus einem zweiten granularen Trägermaterial geformt sind, wobei sich das erste granulare Trägermaterial von dem zweiten granulare Trägermaterial unterscheidet in wenigstens einem von der Dichte, Größe und Form des granularen Trägermaterials. Beispielsweise kann der Träger nur aus diesen drei Bereichen geformt werden. Insbesondere in dieser Ausgestaltung kann bei dem Formen des Trägers es erreicht werden, dass im Inneren des Trägers Lufteinschlüsse oder ein Material geringere Dichte vorliegen, so dass der vorbeschriebene Dichtegradient auftritt. Ferner können die Partikel bereits den Feststoff in dem Matrixmaterial eingeschmolzen aufweisen.

Beispielsweise können die äußeren Bereiche durch ein Trägermaterial geformt werden, welches eine vergleichsweise kleine Partikelform aufweisen, wohingegen der mittlere Bereich geformt werden kann unter Verwendung eines Trägermaterials mit einer vergleichsweise großen Partikelgröße. Dadurch kann das Trägermaterial in einem äußeren Bereich eine dichtere Packung bilden, was nach einem Formen des Trägers zu einer höheren Dichte führt.

Gleiches kann beispielsweise erreicht werden, wenn die Partikelform in den äußeren Bereichen anders ist, als in einem inneren Bereich. Beispielsweise kann die Partikelform jeweils derart gewählt werden, dass die Partikel in einem äußeren Bereich in einer dichteren Packung liegen, als in dem inneren Bereich.

Darüber hinaus kann in dieser Ausgestaltung durch die Einstellung der Größe der Dichtegradient maßgeschneidert werden an das gewünschte Anwendungsgebiet.

Alternativ oder zusätzlich kann es vorgesehen sein, dass Verfahrensschritt b) derart ausgeführt wird, dass in einem inneren Bereich angeordnetes Trägermaterial, beziehungsweise Matrixmaterial, unvollständig aufgeschmolzen wird. Diese Ausgestaltung kann insbesondere durch eine geeignete Temperatursteuerung ermöglicht werden, indem der Träger etwa nicht vollständig durchgeheizt wird. Beispielsweise kann die Liniengeschwindigkeit derartig hoch gewählt werden und/oder die Temperatur entsprechend niedrig gewählt wird, dass beispielsweise nur äußere Bereiche geschmolzen werden, in innenliegender Bereich jedoch nicht oder zumindest nicht vollständig geschmolzen wird. Dadurch kann das Trägermaterial im Inneren des Trägers auch unter Druck Lufteinschlüsse beibehalten, was die Dichte im Inneren des Trägers reduzieren kann.

Ein entsprechender Effekt kann ferner dadurch erzielt werden, dass beim Formen des Trägers der Druck ausreichend niedrig gewählt wird, so dass das Trägermaterial, beispielsweise das Matrixmaterial, durch die vollständige Dicke nicht homogen verpresst beziehungsweise komprimiert wird, sondern durch die Dicke eine heterogene Struktur derart erhält, dass das Trägermaterial in einem inneren Bereich weniger komprimiert wird, als in einem äußeren Bereich.

Es kann weiterhin bevorzugt sein, dass das granulare Trägermaterial entlang der Dicke des Trägers eine unterschiedliche Halbwertsbreite der Partikelgröße aufweist derart, dass die Halbwertsbreite in einem inneren Bereich geringer ist als in den äußeren Bereichen, welche den inneren Bereich entlang der Dicke umrahmen, also in dem von dem mittleren Bereich der oberen Oberfläche zugewandten äußeren Bereich und dem von dem mittleren Bereich der unteren Oberfläche zugewandten äußeren Bereich. Dabei kann die Halbwertsbreite der Partikelgröße in einem oder beiden äußeren Bereichen in einem Bereich von ≥ 1,8mm, insbesondere von ≥ 2mm, beispielsweise von ≥ 2,3mm insbesondere von ≥ 2,5mm, vorliegen, wobei die Obergrenze grundsätzlich frei wählbar ist und beispielsweise bei ≤ 6mm, etwa bei ≤ 4,5mm, beispielsweise bei ≤ 3mm. Entsprechend kann die Halbwertsbreite in dem mittleren Bereich geringer sein. Zur Bestimmung der Partikelgrößen kann auf die allgemein bekannten Verfahren wie beispielsweise die Laserdiffraktometrie zurückgegriffen werden, mit welcher Partikelgrößen im Bereich von einigen Nanometern bis hin zu mehreren Millimetern bestimmt werden können. Unter der Halbwertsbreite, welche auch als FWHM (Full Width at Half Maximum) bezeichnet wird, ist in an sich bekannter Weise insbesondere zu verstehen die Differenz zwischen den beiden Argumentwerten, für die die Funktionswerte auf die Hälfte des Maximums abgesunken sind, anschaulich also etwa bei einer entsprechenden graphischen Kurve die "Breite bei halber Höhe".

In überraschender Weise konnte gefunden werden, dass ein Trägermaterial mit einer hohen Halbertsbreite und dadurch einer vergleichsweise inhomogenen Partikelgrößenverteilung dazu führen kann, dass ein Aufschmelzen des Trägermaterials signifikant verbessert beziehungsweise homogenisiert wird, beziehungsweise bei einer geringen Halbwertsbreite, dass ein Aufschmelzen des Trägermaterials signifikant verringert beziehungsweise heterogeniert wird. Im Detail kann durch das Verwenden eines Trägermaterials in dieser Ausgestaltung ein vollständiges Aufschmelzen des Trägermaterials in den Außenbereichen beschleunigt werden, was insbesondere für eine hohe Dichte und damit eine hohe Stabilität von Vorteil sein kann, und in dem inneren Bereich verlangsamt werden, was das Aufschmelzen verlangsamen und die Dichte reduzieren kann. Darüber hinaus konnte in überraschender Weise gefunden werden, dass durch das Verwenden eines schüttfähigen Trägermaterials in dieser Ausgestaltung nach der vorbeschriebenen Behandlung beziehungsweise Herstellung Träger bereitgestellt werden können, welche eine besonders glatte und damit hochwertige Oberfläche aufweisen können. Beispielsweise kann eine Welligkeit der Trägeroberfläche mit einer Wellentiefe in einem Bereich von 20-40µm erreicht werden.

Dabei steht die Partikelgrößenverteilung in dieser Ausgestaltung im Gegensatz zu im Stand der Technik oftmals bekannten Anforderungen, welche gerade keine Inhomogenität der Partikelgrößen fordern, sondern wo es vielmehr erwünscht ist, hoch homogene schüttfähige Ausgangsprodukte zu verwenden.

Dabei können insbesondere in den Bereich vergleichsweise höherer Dichte insbesondere Trägermaterialien bereitgestellt werden, welche einen besonders geeigneten Feinkornanteil, insbesondere in den äußeren Schichten, aufweisen. Beispielsweise kann hier der Feinkornanteil in einem Bereich von > 0Gew.-% bis ≤ 50Gew.-%, beispielsweise von ≥ 5Gew.-% bis < 40Gew.-%, etwa in einem Bereich ≥ 10Gew.-% bis < 30Gew.-%, ermittelt mit einem Sieb mit 2mm Maschenweite, aufweisen. In anderen Worten können die Trägermaterialien Partikel mit einer Größe in einem Bereich von < 2mm in einem der vorgenannten Bereiche aufweisen. Ferner können neben einem vorgenannten Feinkornanteil auch vergleichsweise große Partikel in dem Trägermaterial vorgesehen sein. So kann es beispielsweise vorgesehen sein, dass ein Anteil mit einer Partikelgröße in einem Bereich von ≥ 3mm, beispielsweise von ≥ 4mm, in einem Anteil in dem Trägermaterial von ≥ 30Gew.-%, beispielsweise von ≥ 40Gew.-% vorliegen. Aus dem Vorstehenden wird somit ersichtlich, dass die Halbwertsbreite der Partikelgröße durch eine vergleichsweise hohe Inhomogenität der Partikelgrößen vergleichsweise hoch ist.

Mit Bezug auf weitere technische Merkmale und Vorteile des vorbeschriebenen Verfahrens wird explizit auf die vorstehende Beschreibung des Trägermaterials und des Paneels Bezug genommen.

Die Erfindung ist nachfolgend anhand der Figuren sowie eines Ausführungsbeispiels weiter erläutert.
Fig. 1 zeigt schematisch eine Ansicht eines Trägers gemäß der Erfindung;
Fig. 2 zeigt schematisch eine Schnittansicht durch ein Paneel gemäß der Erfindung;
Fig. 3 zeigt ein beispielhaftes Dichteprofil durch einen Träger gemäß der Erfindung; und

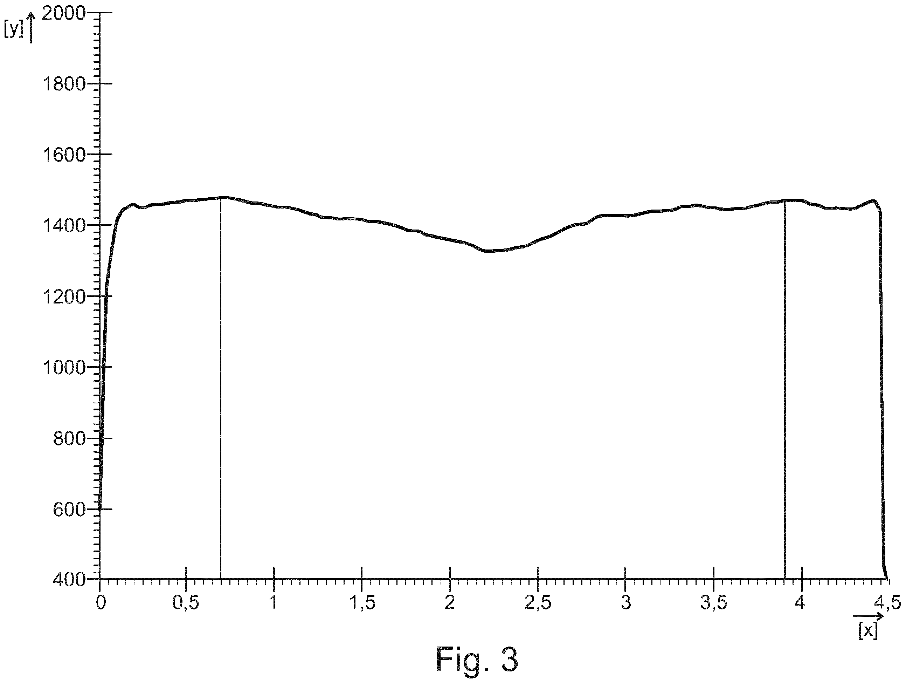

Fig. 3 zeigt ein beispielhaftes Dichteprofil durch einen weiteren Träger gemäß der Erfindung.

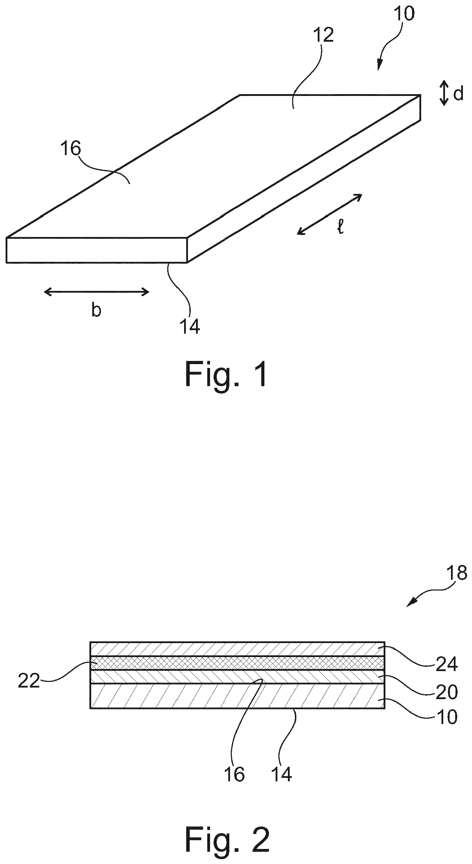

Figur 1 zeigt schematisch eine Ansicht eines kunststoffhaltigen Trägers 10 für ein dekoriertes Wand- oder Bodenpaneel 18, welches in einer Schnittansicht in Figur 2 gezeigt ist. Der Träger 10 umfasst ein Trägermaterial 12 beziehungsweise besteht aus diesem, wobei das Trägermaterial 12 ein kunststoffhaltiges thermoplastisches Matrixmaterial aufweist, in welches ein mineralisches Feststoffmaterial mit einer Partikelgröße von weniger als 800 µm eingebettet ist. Der Träger 10 weist eine Länge l, eine Breite b und eine Dicke d auf. Bei einem derartigen Träger 10 ist es vorgesehen, dass dieser entlang seiner Dicke von einer unteren Oberfläche 14, die dazu vorgesehen ist zu einem Untergrund ausgerichtet zu werden, zu einer oberen Oberfläche 16, die dazu vorgesehen ist, mit einem Dekor versehen zu werden und zu der unteren Oberfläche 14 gegenüberliegend angeordnet ist, einen Dichtegradient aufweist derart, dass die Dichte des Trägermaterials 12 von der unteren Oberfläche 14 zu der oberen Oberfläche 16 zunächst abnimmt und anschließend wieder zunimmt. Dies soll dabei grundsätzlich nicht lokal begrenzt vorliegen sondern wenigstens über eine definierte Breite (b) oder eine definierte Länge (l) von wenigstens 5mm, bevorzugt wenigstens 20mm mit Bezug auf hierüber gemittelte Dichtewerte.

Auf der oberen Oberfläche 16 kann zur Ausbildung eines Paneels 18 etwa ein Druckuntergrund 20, eine Druckschicht als Dekorschicht 22 und eine strukturierte Deckschicht 24 vorgesehen sein.

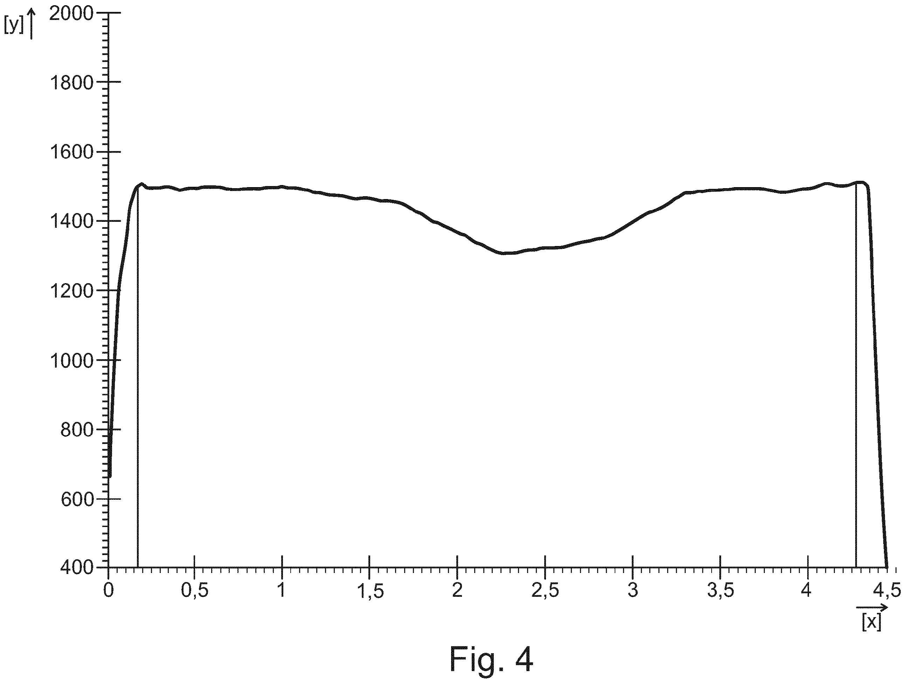

In den Figuren 3 und 4 sind jeweils Dichteprofile durch Ausgestaltungen eines Trägers 10 gezeigt, wobei die x-Achse die Trägerdicke in mm zeigt und die y-Achse die Dichte in kg/m³.

In der Figur 3 ist eine Ausgestaltung gezeigt, bei der ein Dichtegradient derart vorliegt, dass die Dichte von der unteren Oberfläche 14, hier rechts gezeigt, zu der oberen Oberfläche 16 vergleichsweise schwankend abnimmt bis zu einem Dichteminimum und anschließend wiederum vergleichsweise schwankend zunimmt.

Figur 4 zeigt eine Ausgestaltung, bei der der Träger 10 entlang seiner Dicke d einen inneren und zwei sich gegenüberliegend angeordnete äußere Bereiche aufweist, wobei entlang der Dicke d des Trägers ein Dichtegradient derart vorliegt, dass der innere Bereich eine niedrigere Dichte aufweist, als die beiden äußeren Bereiche, wobei die beiden äußeren Bereiche eine im Wesentlichen konstante Dichte aufweisen. Der äußere Bereich erstreckt sich dabei innerhalb einer Dicke ca. von 1,6mm bis 3,2mm, wobei die äußeren Bereiche eine im Wesentlichen konstante Dichte von ungefähr 1500 kg/m³ aufweisen. Dazwischen liegt ein Dichteminimum mit signifikant verringerter Dichte vor.

### Bezugszeichen:

- 10: Träger
- 12: Trägermaterial
- 14: untere Oberfläche
- 16: obere Oberfläche
- 18: Paneel
- 20: Druckuntergrund
- 22: Dekorschicht
- 24: Deckschicht

## Patentansprüche

1. Kunststoffhaltiger Träger für ein dekoriertes Wand- oder Bodenpaneel (18), aufweisend ein Trägermaterial (12) mit einem kunststoffhaltigen thermoplastischen Matrixmaterial, in welches ein mineralisches Feststoffmaterial mit einer Partikelgröße von weniger oder gleich 800 µm eingebettet ist, wobei der Träger (10) eine Länge (l), eine Breite (b) und eine Dicke (d) aufweist, **dadurch gekennzeichnet, dass** der Träger (10) entlang seiner Dicke (d) von einer unteren Oberfläche (14) zu einer der unteren Oberfläche (14) gegenüberliegend angeordneten oberen Oberfläche (16) einen Dichtegradient aufweist derart, dass die über eine definierte Breite (b) oder eine definierte Länge (1) von wenigstens 5mm, bevorzugt wenigstens 20mm, gemittelte Dichte des Trägermaterials (12) von der unteren Oberfläche (14) zu der oberen Oberfläche (16) zunächst abnimmt und anschließend wieder zunimmt.

2. Träger nach Anspruch 1, **dadurch gekennzeichnet, dass** ein Dichtegradient derart vorliegt, dass die Dichte von der unteren Oberfläche (14) zu der oberen Oberfläche (16) zunächst über mindestens drei, bevorzugt mindestens fünf, Messpunkte sukzessive abnimmt und anschließend über mindestens drei, bevorzugt mindestens fünf, Messpunkte sukzessive zunimmt.

3. Träger nach Anspruch 1 oder 2, **dadurch gekennzeichnet, dass** der Träger (10) entlang seiner Dicke (d) einen inneren und zwei sich gegenüberliegend angeordnete äußere Bereiche aufweist, wobei entlang der Dicke (d) des Trägers (10) ein Dichtegradient derart vorliegt, dass der innere Bereich eine niedrigere Dichte aufweist, als die beiden äußeren Bereiche, wobei die beiden äußeren Bereiche eine im Wesentlichen konstante Dichte aufweisen.

4. Träger nach einem der Ansprüche 1 bis 3, **dadurch gekennzeichnet, dass** der Dichtegradient ausgebildet ist durch ein entlang der Dicke (d) des Trägers (10) variierendes eingeschlossenes Gasvolumen.

5. Träger nach einem der Ansprüche 1 bis 4, **dadurch gekennzeichnet, dass** der Dichtegradient ausgebildet ist durch eine entlang der Dicke (d) des Trägers (10) variierende Art des Trägermaterials.

6. Träger nach einem der Ansprüche 1 bis 5, **dadurch gekennzeichnet, dass** der Dichtegradient ausgebildet wird durch einen entlang der Dicke (d) des Trägers (10) variierenden Feststoffanteil.

7. Träger nach einem der Ansprüche 1 bis 6, **dadurch gekennzeichnet, dass** die Dichte entlang der Dicke (d) des Trägers (10) abnimmt um einen Wert in dem Bereich von > 0% bis ≤ 30%, wobei sich die genannten Werte beziehen auf ein Dichtemaximum und ein Dichteminimum entlang der Dicke (d).

8. Träger nach einem der Ansprüche 1 bis 7, **dadurch gekennzeichnet, dass** das Feststoffmaterial zu wenigstens 50 Gew.-%, etwa zu wenigstens 80 Gew.-%, insbesondere etwa zu wenigstens 90 Gew.-%, beispielsweise zu wenigstens 99 Gew.-% bezogen auf das Feststoffmaterial durch Talkum gebildet ist, wobei das Matrixmaterial in einer Menge, bezogen auf das Trägermaterial, von ≥ 20 Gew.-% bis ≤ 70 Gew.-%, beispielsweise von ≥ 30 Gew.-% bis ≤ 55 Gew.-% vorliegt und wobei das Feststoffmaterial in einer Menge, bezogen auf das Trägermaterial, von ≥ 30 Gew.-% bis ≤ 80 Gew.-%, beispielsweise von ≥ 40 Gew.-% bis ≤ 65 Gew.-% vorliegt, und wobei das Matrixmaterial und das Feststoffmaterial gemeinsam, bezogen auf das Trägermaterial, in einer Menge von ≥ 90 Gew.-% vorliegen.

9. Träger nach einem der Ansprüche 1 bis 8, **dadurch gekennzeichnet, dass** das Matrixmaterial Polypropylen umfasst, wobei das Polypropylen eine Mischung aus einem Homopolymer und einem Copolymer aufweist.

10. Dekoriertes Paneel, insbesondere dekoriertes Wand- oder Bodenpaneel (18), aufweisend einen Träger (10) und eine auf den Träger (10) aufgebrachte Dekorschicht (22), insbesondere wobei auf der Dekorschicht (22) eine mit einer Struktur versehene Deckschicht (24) aufgebracht ist, **dadurch gekennzeichnet, dass** der Träger (10) ein Träger (10) gemäß einem der Ansprüche 1 bis 9 ist.

11. Verfahren zum Herstellen eines Trägers (10) für ein dekoriertes Wand- oder Bodenpaneel (18), aufweisend die Verfahrensschritte:
a) Bereitstellen eines granularen Trägermaterials (12), wobei das Trägermaterial (12) ein kunststoffhaltiges thermoplastisches Matrixmaterial und ein mineralisches Feststoffmaterial mit einer Partikelgröße von weniger oder gleich 800 µm aufweist, und
b) Ausbilden eines Trägers mit einer Länge (l), einer Breite (b) und einer Dicke (d) unter Behandlung des Trägermaterials (12) mit Temperatur und Druck,
**dadurch gekennzeichnet,**
**dass** das Trägermaterial (12) derart gewählt oder in Verfahrensschritt b) derart behandelt wird, dass der Träger (10) entlang seiner Dicke (d) von einer unteren Oberfläche (14) zu einer der unteren Oberfläche (14) gegenüberliegend angeordneten oberen Oberfläche (16) einen Dichtegradient aufweist derart, dass die über eine definierte Breite (b) oder eine definierte Länge (l) von wenigstens 5mm, bevorzugt wenigstens 20mm, gemittelte Dichte des Trägermaterials (12) von der unteren Oberfläche (14) zu der oberen Oberfläche (16) zunächst abnimmt und anschließend wieder zunimmt.

12. Verfahren nach Anspruch 11 **dadurch gekennzeichnet, dass** der Träger (12) mehrschichtig aufgebaut wird derart, dass wenigstens ein innerer Bereich aus einem ersten granularen Trägermaterial (12) geformt ist und dass zwei den inneren Bereich entlang der Dicke (d) des Trägers (10) umrahmende äußere Bereiche aus einem zweiten granularen Trägermaterial (12) geformt sind, wobei sich das erste granulare Trägermaterial (12) von dem zweiten granularen Trägermaterial (12) unterscheidet in wenigstens einem von der Dichte, Größe und Form des granularen Trägermaterials (12).

13. Verfahren nach einem der Ansprüche 11 oder 12, **dadurch gekennzeichnet, dass** Verfahrensschritt b) derart ausgeführt wird, dass in einem inneren Bereich angeordnetes Matrixmaterial unvollständig aufgeschmolzen wird.

14. Verfahren nach einem der Ansprüche 11 bis 13, **dadurch gekennzeichnet, dass** Verfahrensschritt b) derart ausgeführt wird, dass in einem inneren Bereich angeordnetes Trägermaterial weniger komprimiert wird, als in einem äußeren Bereich vorliegendes Trägermaterial.

15. Verfahren nach einem der Ansprüche 11 bis 14, **dadurch gekennzeichnet, dass** das Trägermaterial bereitgestellt wird durch einen Extrusionsprozess, wobei der Extruder mit einem Vakuum beaufschlagt wird.

## Claims

1. Plastic-containing carrier for a decorated wall or floor panel (18), comprising a carrier material (12) which includes a plastic-containing thermoplastic matrix material in which a mineral solid material with a particle size of less than or equal to 800 µm is embedded, wherein the carrier (10) has a length (I), a width (b) and a thickness (d),
**characterized in that**
the carrier (10) along its thickness (d) from a lower surface (14) to an upper surface (16) disposed opposite the lower surface (14) has a density gradient such that the density of the carrier material (12), averaged over a defined width (b) or a defined length (I) of at least 5 mm, preferably at least 20 mm, initially decreases and then increases again from the lower surface (14) to the upper surface (16).

2. Carrier according to claim 1, **characterized in that** a density gradient is such that the density from the lower surface (14) to the upper surface (16) first decreases successively over at least three, preferably at least five, measuring points and then increases successively over at least three, preferably at least five, measuring points.

3. Carrier according to claim 1 or 2, **characterized in that** the carrier (10) comprises an inner region and two outer regions disposed oppositely to each other along its thickness (d), wherein along the thickness (d) of the carrier (10) a density gradient is provided such that the inner region has a lower density than the two outer regions, wherein the two outer regions have a substantially constant density.

4. Carrier according to any one of claims 1 to 3, **characterized in that** the density gradient is formed by an enclosed gas volume which varies along the thickness (d) of the carrier (10).

5. Carrier according to any one of claims 1 to 4, **characterized in that** the density gradient is formed by a type of the carrier material which varies along the thickness (d) of the carrier (10).

6. Carrier according to any one of claims 1 to 5, **characterized in that** the density gradient is formed by a proportion of solids which varies along the thickness (d) of the carrier (10).

7. Carrier according to any one of claims 1 to 6, **characterized in that** the density decreases along the thickness (d) of the carrier (10) by a value in the range from > 0% to ≤ 30%, wherein the values mentioned relate to a density maximum and a density minimum along the thickness (d).

8. Carrier according to any one of claims 1 to 7, **characterized in that** the solid material is formed by talcum to at least 50 wt.-%, such as at least 80 wt.-%, in particular about at least 90 wt.-%, for example at least 99 wt.-%, based on the solid material, wherein the matrix material is present in an amount, based on the carrier material, from ≥ 20 wt.-% to ≤ 70 wt.-%, such as from ≥ 30 wt.-% to ≤ 55 wt.-%, and wherein the solid material is present in an amount, based on the carrier material, from ≥ 30 wt.-% to ≤ 80 wt.-%, such as from ≥ 40 wt.-% to ≤ 65 wt.-%, and wherein the matrix material and the solid material together, based on the carrier material, are present an amount of ≥ 90 wt.-%.

9. Carrier according to any one of claims 1 to 8, **characterized in that** the matrix material comprises polypropylene, wherein the polypropylene comprises a mixture of a homopolymer and a copolymer.

10. Decorated panel, in particular decorated wall or floor panel (18), comprising a carrier (10) and a decorative layer (22) applied onto the carrier (10), in particular wherein a cover layer (24) provided with a structure is applied onto the decorative layer (22), **characterized in that** the carrier (10) is a carrier (10) according to any one of claims 1 to 9.

11. Method of producing a carrier (10) for a decorated wall or floor panel (18), comprising the process steps:
a) providing a granular carrier material (12), wherein the carrier material (12) comprises a plastic-containing thermoplastic matrix material and a mineral solid material with a particle size of less than or equal to 800 µm; and
b) forming a carrier with a length (I), a width (b) and a thickness (d) while treating the carrier material (12) with temperature and pressure;
**characterized in that**,
the carrier material (12) is selected in such a way or is treated in process step b) in such a way that the carrier (10) along its thickness (d) from a lower surface (14) to an upper surface (16) disposed opposite the lower surface (14) has a density gradient such that the density of the carrier material (12), averaged over a defined width (b) or a defined length (I) of at least 5 mm, preferably at least 20 mm, initially decreases and then increases again from the lower surface (14) to the upper surface (16).

12. Method according to claim 11,
**characterized in that**
the carrier (12) has a multilayer structure such that at least an inner region is formed from a first granular carrier material (12) and two outer regions sandwiching the inner area along the thickness (d) of the carrier (10) are formed from a second granular carrier material (12), wherein the first granular carrier material (12) differs from the second granular carrier material (12) in at least one of the density, the size and the shape of the granular carrier material (12).

13. Method according to claim 11 or 12, **characterized in that** process step b) is carried out in such a way that matrix material arranged in an inner region is incompletely melted.

14. Method according to any one of claims 11 to 13, **characterized in that** process step b) is carried out in such a way that carrier material arranged in an inner region is less compressed than carrier material present in an outer region.

15. Method according to any one of claims 11 to 14, **characterized in that** the carrier material is provided by an extrusion process, wherein the extruder is subjected to vacuum.

## Revendications

1. Support à base de matière plastique pour panneau mural ou de sol décoré (18), présentant un matériau support (12) avec un matériau matriciel thermoplastique contenant une matière plastique, dans lequel on a incorporé un matériau de charge minéral avec une taille particulaire inférieure ou égale à 800 µm, où le support (10) présente une longueur (l), une largeur (b) et une épaisseur (d), **caractérisé en ce que** le support (10) présente un gradient de densité sur son épaisseur (d) entre une surface inférieure (14) et une surface supérieure (16), disposée en face de la surface inférieure (14), de sorte que la densité du matériau support (12) moyennée sur une largeur (b) définie ou une longueur (l) définie d'au moins 5 mm, de préférence d'au moins 20 mm, diminue d'abord entre la surface inférieure (14) et la surface supérieure (16) et augmente de nouveau ensuite.

2. Support selon la revendication 1, **caractérisé en ce qu'**un gradient de densité est présent, de telle façon que la densité diminue d'abord entre la surface inférieure (14) et la surface supérieure (16) d'au moins trois, de préférence d'au moins cinq points de mesure successifs et ensuite augmente d'au moins trois, de préférence d'au moins cinq, points de mesure successifs.

3. Support selon la revendication 1 ou la revendication 2, **caractérisé en ce que** le support (10) présente sur son épaisseur (d) une région intérieure et deux régions extérieures disposées l'une en face de l'autre, où il y a un gradient de densité sur l'épaisseur (d) du support (10) qui est tel que la région intérieure présente une densité plus faible que les deux régions extérieures, où les deux régions extérieures présentent essentiellement une densité constante.

4. Support selon l'une des revendications 1 à 3, **caractérisé en ce que** le gradient de densité est formé par un volume de gaz emprisonné variant sur l'épaisseur (d) du support (10).

5. Support selon l'une des revendications 1 à 4, **caractérisé en ce que** le gradient de densité est formé par un type de matériau support variant sur l'épaisseur (d) du support (10).

6. Support selon l'une des revendications 1 à 5, **caractérisé en ce que** le gradient de densité est formé par une proportion de charges variant sur l'épaisseur (d) du support (10).

7. Support selon l'une des revendications 1 à 6, **caractérisé en ce que** la densité diminue sur l'épaisseur (d) du support (10) d'une valeur dans la plage > 0 % à ≤ 30 %, où lesdites valeurs se rapportent à une valeur maximale de densité et à une valeur minimale de densité sur l'épaisseur (d)

8. Support selon l'une des revendications 1 à 7, **caractérisé en ce que** le matériau de charge est formé par du talc à au moins 50 % en poids, environ à au moins 80 % en poids, notamment à environ au moins 90 % en poids, par exemple, à au moins 99 % en poids par rapport au matériau de charge, où le matériau matriciel est présent dans une quantité ≥ 20 % en poids à ≤ 70 % en poids, par exemple, ≥ 30 % en poids à ≤ 55 % en poids, par rapport au matériau support, et où le matériau de charge est présent dans une quantité ≥ 30 % en poids à ≤ 80 % en poids, par exemple, ≥ 40 % en poids à ≤ 65 % en poids, par rapport au matériau support, et où le matériau matriciel et le matériau de charge ensemble sont présents dans une quantité ≥ 90 % en poids, par rapport au matériau support.

9. Support selon l'une des revendications 1 à 8, **caractérisé en ce que** le matériau matriciel comprend du polypropylène, où le polypropylène est un mélange à base d'un homopolymère et d'un copolymère.

10. Panneau décoratif, notamment panneau mural ou de sol (18) décoré, présentant un support (10) et une couche décorative (22) appliquée sur le support (10), notamment, où une couche de couverture (24) munie d'une structure est appliquée sur la couche décorative (22), **caractérisé en ce que** le support (10) est un support (10) selon l'une des revendications 1 à 9.

11. Procédé de fabrication d'un support (10) pour panneau mural ou de sol (18) décoré, présentant les étapes de procédé :
a) de mise au point d'un matériau support (12) granulaire, où le matériau support (12) présente un matériau matriciel thermoplastique contenant des matières plastiques, et un matériau de charge minéral avec une taille particulaire inférieure ou égale à 800 µm, et
b) de configuration d'un support avec une longueur (l), une largeur (b) et une épaisseur (d) moyennant un traitement du matériau support (2) en température et en pression,
**caractérisé en ce**
**que** la matériau support (12) est choisi ou est traité dans l'étape de procédé b) de telle manière que le support (10) présente un gradient de densité sur son épaisseur (d) entre une surface inférieure (14) et une surface supérieure (16), disposée en face de la surface inférieure (14), de sorte que la densité du matériau support (12) moyennée sur une largeur (b) définie ou une longueur (l) définie d'au moins 5 mm, de préférence d'au moins 20 mm, diminue d'abord entre la surface inférieure (14) et la surface supérieure (16) et augmente de nouveau ensuite.

12. Procédé selon la revendication 11, **caractérisé en ce que** le support (12) est construit en plusieurs couches de sorte qu'au moins une région intérieure est formée à base d'un premier matériau support (12) granulaire et que deux régions extérieures entourant la région intérieure sur l'épaisseur (d) du support (10) sont formées à base d'un deuxième matériau support (12) granulaire, où le premier matériau support (12) granulaire se distingue du deuxième matériau support (12) granulaire par au moins un facteur parmi la densité, la taille et la forme du matériau support (12) granulaire.

13. Procédé selon l'une des revendications 11 ou 12, **caractérisé en ce que** l'étape de procédé b) est exécutée de telle manière qu'un matériau matriciel disposé dans la région intérieure est fondu de manière incomplète.

14. Procédé selon l'une des revendications 11 à 13, **caractérisé en ce que** l'étape de procédé b) est exécutée de telle manière qu'un matériau support disposé dans une région intérieure est moins comprimé qu'un matériau support se trouvant dans une région extérieure.

15. Procédé selon l'une des revendications 11 à 14, **caractérisé en ce que** le matériau support est préparé par un procédé d'extrusion, où l'extrudeuse est soumise à un vide.
